Europäisches Patentamt

European Patent Office

Office européen des brevets

(11) Publication number: **0 466 524 B1**

# EUROPEAN PATENT SPECIFICATION

(45) Date of publication of patent specification: **31.08.94**  (51) Int. Cl.⁵: **A23J 3/34**, A23J 1/14

(21) Application number: **91306581.9**

(22) Date of filing: **15.07.91**

The file contains technical information submitted after the application was filed and not included in this specification

(54) **Enzyme modified protein and a process for its preparation.**

(30) Priority: **13.07.90 US 552170**

(43) Date of publication of application:
**15.01.92 Bulletin 92/03**

(45) Publication of the grant of the patent:
**31.08.94 Bulletin 94/35**

(84) Designated Contracting States:
**BE DE ES FR GB**

(56) References cited:
**EP-A- 0 141 615**
**EP-A- 0 148 600**

**WPIL/DERWENT, accession no. 77-13723Y
[08], Derwent Publications Ltd, London,GB; &
JP-A-52 003 844 (MITSUBISHI GAS CHEM.
IND.)**

**WPIL/DERWENT, accession no. 77-04733Y
[03], Derwent Publications Ltd, London,GB; &
JP-A-51 139 650 (MITSUBISHI CHEM. IND.
K.K.)**

(73) Proprietor: **PROTEIN TECHNOLOGIES INTER-
NATIONAL, INC.
Checkerboard Square
Saint Louis, Missouri 63164 (US)**

(72) Inventor: **Mertle, Thomas J.
5632 Greenton Way
St. Louis, Missouri 63128 (US)**
Inventor: **McKernan, Agnes J.
2128 Sidney Street
St. Louis, Missouri 63102 (US)**
Inventor: **Chou, David H.
1241 Chavaniac Drive
Ballwin, Missouri 63011 (US)**
Inventor: **Amundson, Curtis M.
743 Estes Park Drive
St. Peters, Missouri 63376 (US)**

(74) Representative: **Tubby, David George et al
MARKS & CLERK,
57-60 Lincoln's Inn Fields
London WC2A 3LS (GB)**

**Description**

The present invention relates primarily to food, and in particular to the preparation of vegetable protein food products. The method of preparing vegetable protein food products of the present invention results in soy protein and similar food protein products which have improved finished meat colour, greatly improved texture, flavour and viscosity when emulsified, and a higher density dry than previously prepared vegetable protein foods. These properties render the protein products more suitable for addition to emulsified meats such as hot dogs, bologna and canned meats than conventional vegetable protein foods.

U.S. Patents No. 3,642,490; 3,694,221 and 2,232,052 disclose products of this general type as well as processes for their preparation.

This invention was conceived and developed largely for soy materials because of the special problems encountered with such soy materials and because of the ready availability of soy products of a good and consistent quality. Therefore, it will be explained largely with respect to soy materials. However it will be apparent that protein meals in general can be used, regardless of their source, and, in particular, vegetable protein meals, such as safflower, cottonseed, sesame, sunflower, peas, oilseed rape and peanut meal, can be used. In its broader aspects the invention includes the use of other vegetable or oilseed materials fish protein materials, and microbial protein products. Accordingly, although the process of the present invention is described, as explained above, primarily with reference to the use of proteins derived from soy, it also applies mutatis mutandis to the use of proteins derived from other materials.

The preparation of vegetable protein products is well known, having been used in a variety of processes. Enzymatic processes for obtaining food meal from vegetable protein materials are also well-known, a typical process being disclosed in U.S. Patent No. 2,232,052. The usual enzymatic process requires a lengthy reaction time, typically several hours at a pH optimum for the enzyme used, and hydrolysis under specific pH and other conditions effective to expose the core proteins of the protein substrate to hydrolysis. The process is conducted as a batch type operation. Within the process for preparing protein foods from, say, soybean meal, various controls are necessary such as a controlled enzymatic reaction to partially hydrolyze, deamidate and modify the protein reactant. The process of this invention may be a continuous type of operation as well as batch. The process results in a product of unexpectedly superior functional properties.

Prior processes for hydrolyzing and/or deamidating, proteins, while producing a commercially useful,product, have not been able to achieve the ultimate in taste and physical properties resulting, on admixture of the product with meats, in a superior meat product. In contrast, the product produced by the process of the present invention can blend smoothly with meat without the need for pre-hydration, and can thereby form excellent tasting products such as hot dogs, bologna and other luncheon meats.

A commercially successful process currently in use for the preparation of isolated vegetable protein materials includes extracting vegetable protein meal, e.g. defatted soybean meal, using an aqueous alkaline bath, to form a liquor. Vegetable protein material is then precipitated from the liquor by acidification. The resulting precipitated vegetable protein material is treated with a polyphosphate to improve its physical properties. Following the polyphosphate treatment the precipitated vegetable protein material is subjected to an enzymatic hydrolysis treatment. In accordance with the present invention, that commercial process has been perfected, resulting in an isolated vegetable protein material having physical properties so improved that the protein can be mixed with meats to form products with enhanced taste and functional properties. The process of the present invention includes the steps of extracting the vegetable protein from the meal with an aqueous alkaline solution but the solution also contains a chelating agent, which can remove by chelation during the protein extraction those elements in the liquor which, through oxidation, are detrimental to colour and odour. Vegetable protein is then precipitated from the solution by acidification. The resulting precipitated vegetable protein is then subjected to an enzymatic hydrolysis under controlled time and concentration conditions for a mild hydrolysis reaction, leading to a change in end groups (reducing the reactivity of the protein material), and to a change in surface characteristics (resulting in a low viscosity when emulsified, and greater density when not emulsified). These two changes yield a vegetable protein of improved taste, odour and colour which in meats form firmer meat products with a more meaty texture.

Thus, the present invention consists in a process for preparing from a protein meal a protein product having physical properties so improved that the protein mixes with meats to form products with enhanced taste and functional properties, which comprises: extracting the protein from the meal with an aqueous alkaline solution, the solution also containing a chelating agent to remove by chelation during the protein extraction elements which through oxidation are detrimental to colour and odour; precipitating protein from the solution by acidification; and subjecting the precipitated protein to an enzymatic hydrolysis under controlled time and concentration conditions for a mild hydrolysis reaction leading to a change in end groups reducing the reactivity of the protein material, and to a change in surface characteristics, resulting in a low viscosity and greater density.

Preferably several extractions, more preferably two extractions, followed by a centrifugation, are effected.

Extensive research has been conducted in an effort to develop useful food products from vegetable oilseeds. As a result, some of these materials are presently being processed to produce food products commonly called edible vegetable proteins. A widely employed commercially used process for preparing such proteins is given hereafter in Example a.

The chelation step of the present invention, as is shown hereafter in the Examples, results in a great enhancement of physical properties by modifying the protein, particularly colour and taste. Although the use of phosphates, especially polyphosphates, has been described and is preferred, other chelating agents such as ethylenediamine tetraacetic acid, ascorbic acid and citric acid can be used.

Control of the pH during the process may be by use of conventional food grade bases and buffers, such as sodium hydroxide, sodium bicarbonate, ammonium carbonate, sodium tripolyphosphates, hydrochloric acid and other conventional reagents. The optimum pH may differ somewhat for each particular enzyme used, but the process is effective within the pH range of from 5.5, preferably from 6, to 10. More preferably, however, the enzymatic reaction is effected at a pH of from 5.5 to 7.5 and most preferably about 6.5, and it is to a value within this range that the pH of the slurry resulting from the hydrolysis is adjusted. The temperature of the reaction may preferably vary from about 10°C room temperature to about 75°C, and the process is generally effective within this temperature range; although not preferred, temperatures outside this range may also be employed. The optimum temperature conditions may also vary somewhat, within this range, for any particular system.

One of the steps in the formation of the isolated protein herein is the enzymatic hydrolysis step; this is a known step, but it has been found that, under the milder conditions employed in the process of the present invention, the final product is much improved. Such mild conditions include a reduction in the concentration of the enzyme. The enzyme material, rather than being added at a level of from about 0.01 to 5.0% by weight of protein material (dry basis), as is conventional, is preferably used at a level of from 0.01 to 0.15%, and more preferably from 0.01 to 0.035% and most preferably from 0.01 to 0.015%, by weight to achieve mild hydrolysis, depending on the temperature and time conditions employed, and the activity of the enzymes. (Enzyme activity may be defined as the amount of enzyme required to produce a standard amount of tyrosine from casein and maltose from starch under standard conditions.) The time required for the hydrolysis step is preferably from about 5 to 30 minutes, more preferably from about 10 to 15 minutes, depending on enzyme concentration and activity and temperature.

The enzymes which are effective in the process of the present invention are generally those proteolytic enzymes which may be obtained from animal, plant and microbial sources. A variety of enzymes have proven satisfactory. These include papain, trypsin, ficin and a variety of bacterial and fungal proteases. The only limitation on the protease is that it be stable and not be inactivated by the pH used for the process.

The preferred enzyme is a plant protease enzyme, more preferably bromelain.

The reacted slurry is preferably heated to inactivate the enzyme and stop the reaction.

Preferably, following the hydrolysis the protein material is subjected to controlled, rapid, dynamic heating with physical working at an elevated temperature, to produce a 13 to 20 percent solids slurry.

It has also been found that the addition of cysteine increases stability. The use of cysteine herein is an adjunct to the steps of adding polyphosphate to the extraction liquor prior to precipitation, and of mild hydrolysis. Cysteine and other reducing agents can be used to lower and/or reduce oxidation of the extracted curd. In addition the process can include protein isolate with conventional products such as anticaking agents, dispersing agents, antifoaming and antidusting etc. Cysteine can be added in an amount of 0.05 to 0.2 weight per cent based on curd solids to the neutral or the acid curd. In particular, we prefer to add L-cysteine to the precipitated soybean material being hydrolyzed to increase product stability.

The functional properties, such as taste, texture and handling of commercial materials are not satisfactory for many food uses. The novel protein material produced by the process of the present invention has greatly improved functional properties with better taste, and a particularly good colour for use in meats. The hydrolysis is conducted under mild conditions including a controlled reaction time which is effective in reducing the viscosity and with good texture and flavour.

We prefer that, following treatment, the slurry is flash cooled, producing a dry product weighing 0.26 to 0.32 $g/cm^3$ (16 to 20 pounds per cubic foot).

While the product may be used as a substitute for dairy product derivatives, such as caseinate and milk, it is also much more suitable for mixing with meat than previously prepared isolated proteins. It can be added as a suspension, or the dried powder can be directly added to the meat product. Its excellent smooth texture, mild taste and good colour make this possible. The basic unique product obtained is one of excellent functionality and exceptional handling and mixing properties. The minimization of oxidation, among other changes the polyphosphate and hydrolysis steps bring about, help make this possible.

The invention is further illustrated by the following Examples, of which Example a illustrates the prior art.

Example a - Prior Art

(1) Soybeans are ground and the oil is extracted with hexane to yield flakes, which are commonly called "soybean meal". The flakes are then added to an aqueous bath, and a food grade alkaline reagent, sodium hydroxide, is added until a pH of 10 is reached. The material is extracted for 30 minutes and is then centrifuged. The soy protein material is then precipitated from the liquor by adding hydrochloric acid until the isoelectric point is reached at about a pH of 4.5. The precipitate is then washed with water to make an aqueous slurry of 15% solids by weight.

(2) The pH of the slurry is adjusted to 7.0 by adding sodium hydroxide.

(3) The slurry is then passed through a jet cooker under a pressure of 5.8 bar (85 p.s.i.g.) simultaneously with steam ejections from the jet cooker under a pressure of 6.5 bar (95 p.s.i.g.) into a pressure retention chamber at a pressure of 5.2 bar (75 p.s.i.g). The steam heats the slurry through the jet cooker to a temperature of 305°F (152°C). After 9 seconds, progressive portions of the heated slurry are suddenly discharged into a receiver at atmospheric pressure or below, causing flash off of vapours laden with undesirable substances. The slurry is cooled by the flash off vaporization. The substance laden vapours are removed from the purified slurry.

(4) The slurry is flash dried in a spray drier to a moisture content of 5% by weight.

In light of this prior art example the process of the invention will now be exemplified in the following Examples 1 to 3.

EXAMPLE 1

| Ingredient | Amount |
|---|---|
| soy flakes | 100 pounds (45.5 kg) |
| sodium tripolyphosphate (10% solution) | 0.5% based on weight of flakes |
| sodium hydroxide | as required for pH |
| Hydrochloric acid | Maintain precipitation pH |
| Water | 1000 pounds (454.5 kg) (First extraction) |
|  | 600 pounds (272.7 kg) (Second extraction) |
| Enzyme (Bromelain) | 0.01% |

Following the procedure described in Example a, the 100 pounds of soy flakes were added to the aqueous alkaline bath but, in addition, 0.5% of sodium tripolyphosphate was added to the bath prior to addition of the soy flakes. The material was extracted for 30 minutes, centrifuged, and extracted again. The soy protein material was then precipitated as in Example a until the isoelectric point was reached at about a pH of 4.5. The precipitate was washed with water.

Instead of drying the slurry as in Example a, when the slurry temperature reached 125°F (52°C) (the pH of the material being 6.5), the aqueous solution of Bromelain enzyme was added at the low level of 0.01% by weight of protein (dry basis). The enzyme treated slurry was allowed to react for fifteen minutes as the viscosity of the slurry began to drop.

After fifteen minutes, the reaction of the enzymes was stopped by raising the temperature. The slurry was then flash dried in a spray drier to a moisture content of about 5 weight percent as in Example a.

Treating the protein liquor during the extraction steps, that is before precipitation, brings about a release and removal of undesirable compounds to improve the physical properties such as colour, odour and stability. The mild enzymatic hydrolysis modifies the isolated protein product by changing end groups and surface characteristics to bring about a superior product with better texture and a more meaty flavour.

Properties of an isolated soy protein prepared by the process of Example 1 are set forth in Table 1.

Table 1

| Isolated Soy Protein Evaluation | |
|---|---|
| Total Solids (%)(water slurry) | 9.0 |
| pH | 6.3 |
| Protein (%AI) | 86.6 |
| Protein (%DB) | 90.5 |
| Moisture (%) | 4.3 |
| Ash (%).7 | 5.1 |
| Sulphite (ppm) | 2 |
| Iron (ppm) | 114 |
| Trypsin Inhib. (TIU/mg).4 | 7.8 |
| End-groups (mNH2/g sam) | 4.4 |
| Density (lb/ft3) | 15.4 (0.25 g/cm$^3$) |
| Gel Rate (g, 10min) | 67 |
| Meat System French Frankfurter | |
| Fracture Force (g) | 6453 |
| Hardness (g) | 7151 |
| Stability (g/100g) | 5.2 |
| Yield (%) | 89.4 |
| pH | 6.2 |
| Hunter L | 52 |
| a | 8.8 |
| b | 8.3 |

In order to compare the product prepared according to Example 1 with the commercial product prepared by Example a the following test data using a conventional meat system is given in Table 2. The meat system included a beef frankfurter formula containing 37% high quality meat, 13% organ or mechanically deboned meat, and 5.7% assorted flours and starches. The isolated soy protein is present at a level of 2.41%.

## Table 2

|  | Example a | Example 1 |
|---|---|---|
| Fracture Force (g) | 2773 | 3784 |
| Hardness (g) | 5307 | 5469 |
| Emulsion Stability gm/100 | 0.99 | 0.35 |
| Yield % | 92.1 | 92.0 |
| pH | 6.05 | 5.93 |
| L | 44.8 | 45.3 |
| a | 12.7 | 12.5 |
| b | 28.3 | 8.1 |

## Sensory Texture

### Commercial Test

|  | Example a | Example 1 |
|---|---|---|
| pH | 5.75 | 5.72 |
| L | 46.3 | 44.7 |
| a | 13.1 | 13.5 |
| b | 9.7 | 9.5 |
| F x (fracture force, g.) | 2268 | 2482 |
| s.d. | 221 | 330 |
| H x (hardness, g.) | 4717 | 5145 |
| s.d. | 385 | 769 |

The data in Table 2 show that, by using the polyphosphate in the extraction step, a superior product can be made. The isolated soy protein of the invention is more firm and is much more stable than that of Example a. Stability, for instance, is 0.35 compared to 0.99. In addition the product of the present invention has better colour for emulsified meats, and a lower soy flavour. It also has a more meaty flavour and superior texture.

## EXAMPLE 3

Following the procedure of Example 1, additional proteins were prepared using hexametaphosphate in the extraction water instead of sodium tripolyphosphate. There was no significant difference in properties and the finished meat had the same improved colour and taste.

Having been given the controlling features of the invention modifications will occur to those in this well known, but still empirical art. Thus sulphites, defoaming agents and the like can be included in the formulations. And it has already been indicated that pH values and temperatures can be varied. Such ramifications are deemed to be within the scope of the invention. It is intended that the invention not be restricted to the embodiments given herein for purposes of illustration, but is to be limited only by the claims appended hereto and their equivalents.

**Claims**

1. A process for preparing from a protein meal a protein product having physical properties so improved that the protein mixes with meats to form products with enhanced taste and functional properties, which comprises: extracting the protein from the meal with an aqueous alkaline solution, the solution also containing a chelating agent to remove by chelation during the protein extraction elements which through oxidation are detrimental to colour and odour; precipitating protein from the solution by acidification; and subjecting the precipitated protein to an enzymatic hydrolysis under controlled time and concentration conditions for a mild hydrolysis reaction leading to a change in end groups reducing the reactivity of the protein material, and to a change in surface characteristics, resulting in a low viscosity and greater density.

2. A process according to Claim 1, in which the protein meal is a vegetable protein meal.

3. A process according to Claim 2, in which the protein meal is a vegetable protein meal derived from an oilseed.

4. A process according to Claim 3, in which the vegetable protein meal is safflower meal.

5. A process according to Claim 3, in which the vegetable protein meal is soybean meal.

6. A process according to any one of the preceding Claims, in which several extractions followed by a centrifugation are effected.

7. A process according to Claim 6, in which two extractions followed by a centrifugation are effected.

8. A process according to Claim 1, in which following the hydrolysis the protein material is subjected to controlled, rapid, dynamic heating with physical working at an elevated temperature, to produce a 13 to 20 percent solids slurry.

9. A process according to any one of the preceding Claims, in which the pH of the slurry resulting from the hydrolysis is adjusted to between about 5.5 and 7.5.

10. A process according to Claim 9, in which the pH of the slurry resulting from the hydrolysis is adjusted to about 6.5.

11. A process according to any one of the preceding Claims, in which the enzyme is an animal, plant or microbial enzyme.

12. A process according to any one of the preceding Claims, in which the enzymatic hydrolysis treatment is effected with a plant protease enzyme.

13. A process according to Claim 12, in which the plant protease enzyme is bromelain.

14. A process according to any one of the preceding Claims, in which L-cysteine is added to the precipitated soybean material being hydrolyzed to increase product stability.

15. A process according to any one of the preceding Claims, in which the enzyme is added at a level of from 0.01 to 0.15 percent by weight based on the dry weight of the protein in the slurry.

**16.** A process according to any one of the preceding Claims, in which the reacted slurry is heated to inactivate the enzyme and stop the reaction.

**17.** A process according to Claim 16, in which the slurry is flash cooled, producing a dry product weighting 0.26 to 0.32 g/cm$^3$ (16 to 20 pounds er cubic foot).

**18.** A process according to any one of the preceding Claims, in which the chelating agent is a phosphate, preferably a polyphosphate.

**Patentansprüche**

**1.** Verfahren zum Herstellen eines Proteinprodukts aus einem Proteinmehl, wobei das Proteinprodukt derart verbesserte physische Eigenschaften hat, daß sich das Protein mit Fleisch vermischt, um Produkte mit verbessertem Geschmack und verbesserten Gebrauchseigenschaften zu bilden, wobei: das Protein aus dem Mehl mit einer wäßrigen alkalischen Lösung extrahiert wird, wobei die Lösung außerdem einen Chelatbildner enthält, um durch Chelatbildung während der Proteinextraktion Elemente zu entfernen, die aufgrund von Oxidation für Farbe und Geruch schädlich sind; Protein aus der Lösung durch Ansäuern ausgefällt wird; und das ausgefällte Protein einer enzymatischen Hydrolyse unter gesteuerten Zeit- und Konzentrationsbedingungen für eine schonende Hydrolysereaktion unterworfen wird, die zu einer Änderung von Endgruppen, die das Reaktionsvermögen des Proteinmaterials reduziert, und zu einer Änderung von Oberflächeneigenschaften führt, was in einer geringen Viskosität und größerer Dichte resultiert.

**2.** Verfahren nach Anspruch 1, wobei das Proteinmehl ein pflanzliches Proteinmehl ist.

**3.** Verfahren nach Anspruch 2, wobei das Proteinmehl ein pflanzliches Proteinmehl ist, das von einer Ölsaat stammt.

**4.** Verfahren nach Anspruch 3, wobei das pflanzliche Proteinmehl Saflormehl ist.

**5.** Verfahren nach Anspruch 3, wobei das pflanzliche Proteinmehl Sojamehl ist.

**6.** Verfahren nach einem der vorhergehenden Ansprüche, wobei mehrere Extraktionen gefolgt von einer Zentrifugation durchgeführt werden.

**7.** Verfahren nach Anspruch 6, wobei zwei Extraktionen gefolgt von einer Zentrifugation durchgeführt werden.

**8.** Verfahren nach Anspruch 1, wobei anschließend an die Hydrolyse das Proteinmaterial einem gesteuerten, schnellen, dynamischen Erhitzen mit körperlicher Bearbeitung bei einer erhöhten Temperatur unterworfen wird, um einen Brei mit 13-20 % Feststoffen zu erzeugen.

**9.** Verfahren nach einem der vorhergehenden Ansprüche, wobei der pH des aus der Hydrolyse resultierenden Breis auf zwischen ca. 5,5 und 7,5 eingestellt wird.

**10.** Verfahren nach Anspruch 9, wobei der pH des aus der Hydrolyse resultierenden Breis auf ca. 6,5 eingestellt wird.

**11.** Verfahren nach einem der vorhergehenden Ansprüche, wobei das Enzym ein tierisches, pflanzliches oder mikrobielles Enzym ist.

**12.** Verfahren nach einem der vorhergehenden Ansprüche, wobei die enzymatische Hydrolysebehandlung mit einem pflanzlichen Proteaseenzym durchgeführt wird.

**13.** Verfahren nach Anspruch 12, wobei das Pflanzliche Proteaseenzym Bromelain ist.

**14.** Verfahren nach einem der vorhergehenden Ansprüche, wobei dem ausgefällten Sojamaterial, das hydrolisiert wird, L-Cystein zugesetzt wird, um die Stabilität des Produkts zu erhöhen.

**15.** Verfahren nach einem der vorhergehenden Ansprüche, wobei das Enzym in einer Menge von 0,01-0,15 Gew.-%, bezogen auf das Trockengewicht des Proteins in dem Brei, zugesetzt wird.

**16.** Verfahren nach einem der vorhergehenden Ansprüche, wobei der umgesetzte Brei erhitzt wird, um das Enzym zu inaktivieren und die Reaktion abzubrechen.

**17.** Verfahren nach Anspruch 16, wobei der Brei entspannungsgekühlt wird, wobei ein Trockenprodukt erzeugt wird, das 0,26-0,32 g/cm$^3$ (16-20 lb/ft$^3$) wiegt.

**18.** Verfahren nach einem der vorhergehenden Ansprüche, wobei der Chelatbildner ein Phosphat, bevorzugt Polyphosphat ist.

## Revendications

**1.** Procédé pour la préparation, au départ d'une farine protéinique, d'un produit protéinique ayant des propriétés physiques à ce point améliorées que les mélanges de protéines avec des viandes forment des produits avec une saveur et les propriétés fonctionnelles augmentées qui comprend: l'extraction de la protéine de la farine avec une solution aqueuse alcaline, la solution contenant également un agent de chélation pour enlever par chélation pendant l'extraction de la protéine les éléments qui, par oxydation, sont détrimentaux pour la coloration et l'odeur; la précipitation de la protéine de la solution par acidification et la soumission de la protéine précipitée à une hydrolyse enzymatique pendant une durée contrôlée et dans des conditions de concentration contrôlées pour provoquer une réaction d'hydrolyse douce conduisant à un changement dans les groupes terminaux réduisant la réactivité de la matière protéinique et à un changement dans la caractéristique de surface ayant pour résultat une faible viscosité et une plus forte densité.

**2.** Procédé selon la revendication 1, dans lequel la farine protéinique est une farine de protéine végétale.

**3.** Procédé selon la revendication 2, dans lequel la farine protéinique est une farine de protéine végétale dérivée d'une graisse oléagineuse.

**4.** Procédé selon la revendication 3, dans lequel la farine protéinique végétale est de la farine de carthame.

**5.** Procédé selon la revendication 3, dans lequel la farine de protéine végétale est de la farine de graine de soja.

**6.** Procédé selon l'une quelconque des revendications précédentes, dans lequel on effectue plusieurs extractions suivies d'une centrifugation.

**7.** Procédé selon la revendication 6, dans lequel on effectue deux extractions suivies d'une centrifugation.

**8.** Procédé selon la revendication 1, dans lequel, après l'hydrolyse, la matière protéinique est soumise à un chauffage contrôlé, rapide et dynamique avec une opération physique à une température élevée pour produire une bouillie avec de 13 à 20 pourcent de matières solides.

**9.** Procédé selon l'une quelconque des revendications précédentes, dans lequel le pH de la bouillie résultant de l'hydrolyse est ajusté entre environ 5.5 et 7.5.

**10.** Procédé selon la revendication 9, dans lequel le pH de la bouillie résultant de l'hydrolyse est ajusté à environ 6.5.

**11.** Procédé selon l'une quelconque des revendications précédentes, dans lequel l'enzyme est une enzyme animale, végétale ou microbienne.

**12.** Procédé selon l'une quelconque des revendications précédentes, dans lequel le traitement d'hydrolyse enzymatique est effectué avec une enzyme protéase végétale.

**13.** Procédé selon la revendication 12, dans lequel l'enzyme protéase végétale est la bromélaine.

**14.** Procédé selon l'une quelconque des revendications précédentes, dans lequel on ajoute de la L-cystéine à la matière de graine de soja précipitée qui est hydrolysée pour augmenter la stabilité du produit.

**15.** Procédé selon l'une quelconque des revendications précédentes, dans lequel l'enzyme est ajoutée à un taux allant de 0.01 à 0.15 pourcent en poids sur la base du poids sec de la protéine dans la bouillie.

**16.** Procédé selon l'une quelconque des revendications précédentes, dans lequel la bouillie qui a réagi est chauffée pour inactiver l'enzyme et arrêter la réaction.

**17.** Procédé selon la revendication 16, dans lequel la bouillie est refroidie ultra-rapidement, ce qui fournit un produit sec pesant de 0.26 à 0.32 g/cm$^3$ (16 à 20 livres par pied carré).

**18.** Procédé selon l'une quelconque des revendications précédentes, dans lequel l'agent de chélation est un phosphate, de préférence un polyphosphate.